(19) Europäisches Patentamt
European Patent Office
Office européen des brevets

(11) **EP 3 169 417 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **16727509.8**

(22) Anmeldetag: **07.06.2016**

(51) Int Cl.:
*A63G 7/00* (2006.01)   *G07C 1/22* (2006.01)
*A63G 33/00* (2006.01)   *A63F 9/00* (2006.01)

(86) Internationale Anmeldenummer:
**PCT/EP2016/062925**

(87) Internationale Veröffentlichungsnummer:
**WO 2017/059967 (13.04.2017 Gazette 2017/15)**

(54) **INTERAKTIVES FAHRGESCHÄFT, INSBESONDERE ACHTERBAHN**

INTERACTIVE FAIRGROUND RIDE, IN PARTICULAR ROLLERCOASTER

MANÈGE INTERACTIF, EN PARTICULIER MONTAGNES RUSSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2015 DE 102015117012**

(43) Veröffentlichungstag der Anmeldung:
**24.05.2017 Patentblatt 2017/21**

(73) Patentinhaber: **Mack Rides GmbH & Co. KG**
**79183 Waldkirch (DE)**

(72) Erfinder: **SCHRADE, Stephan**
**79331 Teningen (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
**WO-A1-03/041827    WO-A1-2006/004392**
**DE-A1- 10 245 150    US-A1- 2008 257 196**

**Beschreibung**

Die Erfindung betrifft ein interaktives Fahrgeschäft, insbesondere eine Achterbahn, der im Oberbegriff des Anspruchs 1 angegebenen Art.

Ein solches interaktives Fahrgeschäft ist zum Beispiel in US 2008/257196 A1) offenbart.

Achterbahnen bestehen üblicherweise aus einer in sich geschlossenen Schienenbahn, auf welcher Fahrzeuge mit Sitzplätzen für mehrere Fahrgäste entweder durch Schwerkraft oder mittels eines Antriebes bewegt werden.

Zur Steigerung des Fahrvergnügens sowie Erhöhung der Attraktivität wurden unter anderem interaktive Fahrgeschäfte entwickelt, bei welchen die Fahrgäste aktiv in das Fahrgeschehen eingreifen können.

Aus DE 102 45 150 A1 ist zum Beispiel ein Fahrgeschäft, hier Vergnügungsgerät genannt, bekannt, bei welchen unter den Fahrgästen durch individuelle Steuerung des Betriebsablaufs ein Wettbewerb durchgeführt werden kann.

Hier setzt die vorliegende Erfindung ein.

Ihr liegt die Aufgabe zugrunde, bei diesem Wettbewerb das Teamverhalten der Fahrgäste eines Fahrzeuges zu fördern.

Wie bei dem Fahrgeschäft nach DE 102 45 150 A1 ist im Fahrzeug jedem Fahrgast ein eigenes Steuerpult mit einem Steuertaster zugeordnet, mit welchem der Fahrgast Einfluss auf den Fahrablauf nehmen kann. Außerdem ist eine Anzeigeeinheit vorgesehen, auf welcher der Fahrgast die Wirkung seiner Steuerung beobachten kann. Notwendig für die Erfassung der Fahrdaten ist eine am Anfang der Schienenbahn angeordnete Startrampe mit einer Signaleinheit, welche zur Einleitung des Starts ein visuelles und/oder akustisches Startsignal erzeugt.

Nach dem Grundgedanken der vorliegenden Erfindung sollen die Fahrgäste als Team gemeinsam einen möglichst frühen Start des Fahrzeuges ermöglichen.

Um diese Idee zu verwirklichen, sind die Steuertaste und gegebenenfalls die Anzeigeeinheiten aller Steuerpulte eines Fahrzeuges über einen Transmitter mit einer Auswertungs- und Steuereinheit verbunden, welche die Reaktionszeiten aller Fahrgäste erfasst und aus diesen einen Mittelwert, die kollektive Reaktionszeit, errechnet, welche vorzugsweise von der Anzeigeeinheit angezeigt wird, worauf nach Ablauf der kollektiven Reaktionszeit ein Signal zum Start des Fahrzeuges erzeugt wird.

Nach dem Vorschlag gemäß Anspruch 2 ermittelt die Auswertungs- und Steuerungseinheit aus der kollektiven Reaktionszeit t einen Boostfaktor B, der bei der Reaktionszeit 0 100% und bei der zugelassenen Reaktionszeit a 0% beträgt.

Nach Anspruch 3 kann in Abhängigkeit vom Bootsfaktor der Startzeitpunkt verzögert und/oder die Fahrzeuggeschwindigkeit vermindert werden.

Wie mit Anspruch 4 vorgeschlagen, kann zwischen Boostfaktor und kollektiver Reaktionszeit ein linearer Zusammenhang nach folgender Formel bestehen:

$$B(\%) = 100\ (1-t/a).$$

Die individuelle Reaktionszeit jedes Fahrgastes wird nach Abgabe des Startsignals durch die Auswertungs- und Steuerungseinheit erfasst.

Um zu vermeiden, dass der Fahrgast schon vor dem Startsignal durch exzessives Betätigen des Steuertasters eine möglichst kurze Reaktionszeit generiert, kann nach dem Vorschlag gemäß Anspruch 5 vor Abgabe des Startsignals zunächst ein Vorsignal erzeugt werden, bei welchem die Steuertaster aller Fahrgäste derart freigeschaltet werden, dass die mittels des Steuertasters in dem Intervall zwischen Vorsignal und Startsignal erzeugten Impulse bei Ermittlung der Reaktionszeit unberücksichtigt bleiben oder zu einer Erhöhung der ermittelten Reaktionszeit führen.

Damit die Fahrgäste und auch die außenstehenden Zuschauer die Reaktion jedes einzelnen Fahrgastes beobachten können, kann nach dem Vorschlag gemäß Anspruch 6 neben der ermittelten Reaktionszeit und dem Boostfaktor aller Fahrgäste die individuelle Reaktionszeit und der individuelle Boostfaktor jedes einzelnen Fahrgastes von der Auswertungs- und Steuerungseinheit ermittelt und mittels eines zentralen Displays während der ganzen Fahrt angezeigt werden.

Nach dem erfindungsgemäßen Vorschlag ist jedem Fahrgast eine Anzeigeeinheit zugeordnet, die auf einem Display die kollektive Reaktionszeit sowie den hieraus ermittelten Boostfaktor wiedergibt. Diese Anzeigeeinheit kann, wie mit Anspruch 7 angegeben, zusätzlich Signallampen zur qualitativen visuellen Anzeige der ermittelten Reaktionszeiten aufweisen.

Falls das Fahrgeschäft einen Wettbewerb zwischen mehreren Teams ermöglichen soll, sind gemäß Anspruch 8 mehrere Schienenbahnen mit eigenen Startrampen nah zueinander, vorzugsweise parallel zueinander, anzuordnen.

In seiner einfachsten Ausführung werden die Fahrzeuge mit einer vorbestimmten Geschwindigkeit von der Startrampe aus in die Bahn geschickt. Zur weiteren Verbesserung des Fahrgeschehens sind nach dem Vorschlag gemäß Anspruch 9 im Verlauf der Schienenbahnen Beschleunigungsstrecken mit eigenen Antrieben angeordnet, die von den Fahrgästen mittels der Steuertaster beeinflusst, insbesondere aktiviert, werden können.

Als Fahrzeugantriebe eignen sich gemäß Anspruch 10 vorzugsweise Linearmotoren.

Die von den Fahrgästen generierten Signale können alternativ zur Auswertungs- und Steuerungseinheit über Funk oder über Stromschienen übertragen werden.

Zur weiteren Erhöhung des Fahrvergnügens ist gemäß Anspruch 12 mit der Auswertungs- und Steuerungseinheit ein Effektgenerator verbunden, welcher in Abhängigkeit vom Boostfaktor optische und/oder akustische Effekte auslöst.

Gemäß Anspruch 13 weist das Fahrgeschäft Mittel zum Sammeln der Reaktionszeiten auf zum Erstellen einer Rangliste aus den gesammelten Reaktionszeiten nach wenigstens einer Fahrt des Fahrzeuges auf der Schienenbahn. Dadurch kann ein Wettbewerbsgefühl bei den Fahrgästen verstärkt werden. Vorzugsweise wird die Rangliste über einen Zeitraum von mehreren Fahrten erstellt.

Im Rahmen der Erfindung ist es nicht zwingend erforderlich, dass der Boostfaktor aus dem Stillstand zum Start des Fahrzeuges ermittelt wird. Nach Anspruch 14 ist der Boostfaktor in wenigstens einem Abschnitt der Schienenbahn während einer Durchfahrt des Fahrzeuges durch diesen Abschnitt von der Auswertungs- und Steuerungseinheit ermittelbar. Vorzugsweise wird der Boostfaktor beim Durchfahren einer Launch-Sektion ermittelt. Insbesondere kann beim Einfahren in einen entsprechenden Abschnitt ein Signal, beispielsweise ein akustisches und/oder optisches, erzeugt werden, um die Fahrgäste zum schnellen reagieren zu beeinflussen.

Der Gegenstand der Erfindung ist anhand schematischer Zeichnungen nachstehend im Einzelnen erläutert.

In den Zeichnungen zeigen:

Figur 1 schematische Aufsicht auf ein Fahrzeug mit acht Sitzplätzen und diesen zugeordneten Steuerpulten,

Figur 2 Aufsicht eines Steuerpultes mit Starttaste, Anzeigeeinheit und Signallampen und

Figur 3 Blockschaltbild des interaktiven Fahrgeschäftes gemäß der Erfindung mit symbolisch dargestellten Signalwegen.

Das Fahrgeschäft, dessen Fahrzeuge von den Fahrgästen interaktiv gesteuert werden, ist zeichnerisch nicht dargestellt. Vorzugsweise besteht es aus einer Achterbahn mit einer in sich geschlossenen Schienenbahn, auf welcher motorisch angetriebene Fahrzeuge 10 bewegt werden.

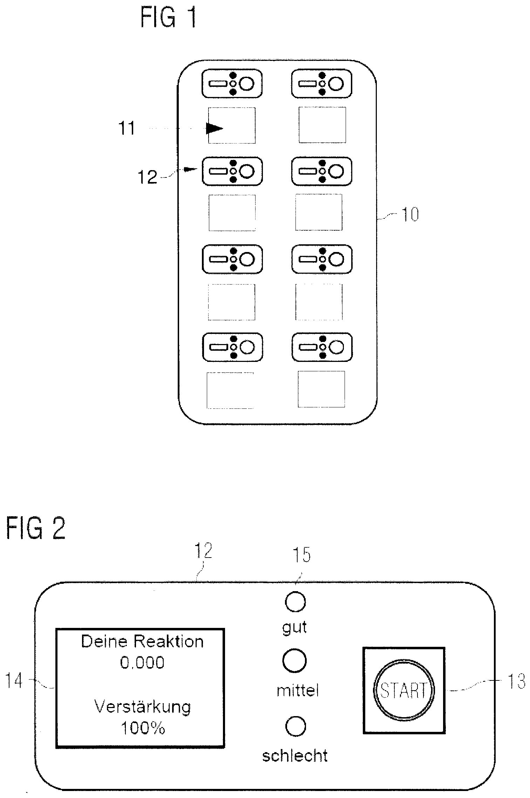

Die in Figur 1 schematisch dargestellten Fahrzeuge 10 weisen eine Anzahl, hier acht, Sitzplätze 11 auf, welchen jeweils ein Steuerpult 12 zugeordnet ist. Dieses Steuerpult 12 besitzt einen Starttaster 13, eine Anzeigeeinheit 14 zur Anzeige der individuellen Reaktionszeit (your reaction) und des individuellen Boostfaktors, sowie Signallampen 15 zur qualitativen Anzeige der Reaktionszeit mit den Angaben "GREAT" für eine kurze Reaktionszeit "AVERAGE" für eine mittlere Reaktionszeit und "POOR" für eine längere Reaktionszeit.

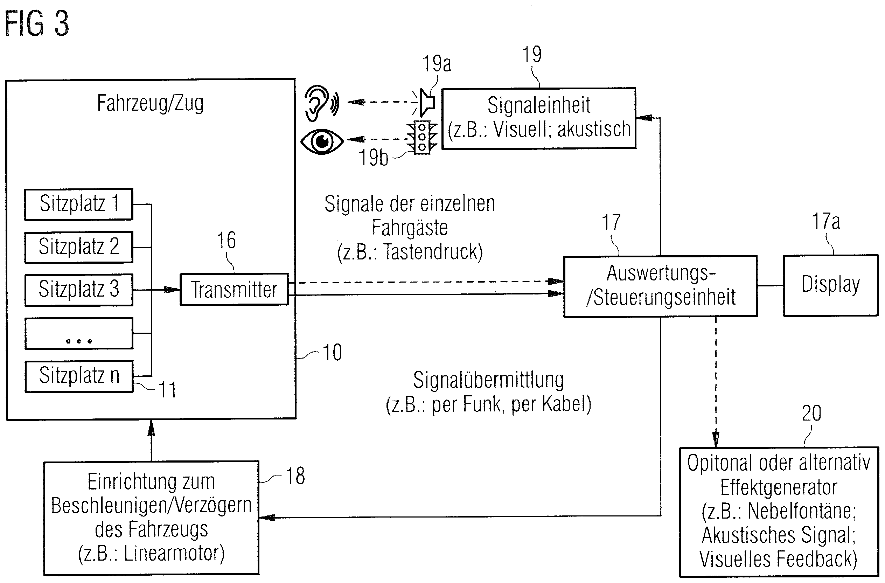

Wie dem Blokschaltbild gemäß Figur 3 zu entnehmen ist, sind die Steuerpulte 12 aller Sitzplätze 11 mit einem Transmitter 16 verbunden, der die von den Fahrgästen mit der Steuertaste 13 erzeugten Signale über einen Transmitter 16 der Auswertungs- und Steuerungseinheit 17 zuführt. Die Übertragung der Transmittersignale kann drahtlos, also z. B. per Funk, oder galvanisch per Kabel z. B. über längs der Schienenbahn vorgesehenen Stromschienen erfolgen.

Nach dem erfindungsgemäßen Vorschlag wertet die Auswertungs- und/oder Steuerungseinheit 17 die von den Steuertastern erzeugten individuellen Startsignale zur Ermittlung einer kollektiven Reaktionszeit aus, in deren Abhängigkeit die Steuerungseinheit ein Startsignal erzeugt, welches der Einrichtung zum Antrieb des Fahrzeugs, also dem Fahrzeugantrieb, 18, zugeführt wird. Je kürzer die kollektive Reaktionszeit ist, desto früher wird das Fahrzeug 10 gestartet. Auch ist es möglich, zusätzlich zur Startzeitbeeinflussung die Fahrzeuggeschwindigkeit des gestarteten Fahrzeugs 14 zu beeinflussen.

Die Auswertungs- und Steuerungseinheit 17 steuert ferner eine Signaleinheit 19, welche über Lautsprecher 19a und/oder eine Ampel 19b akustische und/oder visuelle Startsignale für die Fahrgäste erzeugt.

Eine derartige Anlage ermöglicht einen interaktiven Fahrbetrieb z. B. in folgender Weise.

Nachdem die Fahrgäste auf ihren Sitzplätzen 11 im Fahrzeug 10 Platz genommen haben, werden sie zunächst durch die Ampel 19b oder ein entsprechendes akustisches Signal des Lautsprechers 19a aufmerksam gemacht.

Nach Ablauf des Countdowns bzw. nach Erscheinen des optischen Startsignals auf der Ampel 19b beginnt die Zeitnahme.

Ab diesem Zeitpunkt müssen die Fahrgäste den Starttaster 13 betätigen. Die Zeitspanne zwischen Startsignal und Betätigen des Starttasters 13 ist die individuelle Reaktionszeit.

Es empfiehlt sich, den Starttaster 13 erst mit dem Startsignal freizuschalten, damit ein exzessives Tastendrücken vor Abgabe des Startsignals keinen Effekt hat. Auch kann nach einem anderen Vorschlag Tastendrücken vor Erscheinen des Startsignals als Frühstart bestraft werden.

Die individuellen Reaktionszeiten werden mittels des Transmitters 16 per Funk oder per Kabel an die Auswertungs- und Steuerungseinheit 17 übertragen, welche die kollektive Reaktionszeit ermittelt sowie einen Boostfaktor errechnet. Eine kollektive Reaktionszeit von 0 Sekunden entspricht einem Boostfaktor von 100%, während eine vom System vorgegebene Reaktionszeit von a Sekunden, z. B. 2 Sekunden, einem Boostfaktor von 0% entspricht. Der Zusammenhang zwischen Reaktionszeit und Boostfaktor kann beliebig gewählt werden. Im einfachsten Fall ist er linear.

Die kollektive Reaktionszeit und der sich hieraus ergebende Boostfaktor wird auf einem Display 17a angezeigt, welcher sowohl von den Fahrgästen als auch den Wartenden beobachtet werden kann. Mittels des Boostfaktors kann entweder der Startzeitpunkt oder die Startgeschwindigkeit beeinflusst werden.

Erfordert das Fahrgeschäft eine Startgeschwindigkeit von z. B. 80 km/h und beträgt die maximal zulässige Startgeschwindigkeit 120km/h, so ergibt sich hieraus ein maximal zulässiger Boost von 40km/h, das entspricht einem Boost von 100%, während bei einer Mindeststartgeschwindigkeit von 80km/h der Boost 0 % beträgt.

Nach einem anderen Vorschlag werden die Fahrzeuge vom Fahrzeugantrieb 18 mit gleicher Geschwindigkeit gestartet, wobei der individuelle Startzeitpunkt von der ermittelten kollektiven Reaktionszeit abhängt.

Bei dem in Figur 3 veranschaulichten Ausführungsbeispiel ist ferner ein sogenannter Effektgenerator 20 vorgesehen, der z. B. eine Nebelfontäne, ein akustisches oder auch ein optisches Signal erzeugen kann. Gesteuert wird der Effektgenerator 20 gleichfalls von der Auswertungs- und Steuerungseinheit 17 nach einem vom individuellen Fahrergebnis der Fahrgäste abhängigen Ergebnis.

Bezugszeichenliste

| 10 | Fahrzeug |
|---|---|
| 11 | Sitzplätze |
| 12 | Steuerpult |
| 13 | Steuertaster |
| 14 | Anzeigeeinheit |
| 15 | Signallampen |
| 16 | Transmitter |
| 17 | Auswertungs- und Steuerungseinheit |
| 17a | Display |
| 18 | Fahrzeugantrieb |
| | Einrichtung zum Beschleunigen/Verzögern des Fahrzeugs |
| 19 | Signaleinheit |
| 19a | Lautsprecher |
| 19b | Ampel |
| 20 | Effektgenerator |

**Patentansprüche**

1. Interaktives Fahrgeschäft, insbesondere Achterbahn, bestehend aus einer vorzugsweise in sich geschlossenen Schienenbahn und mindestens einem auf der Schienenbahn geführten, angetriebenen Fahrzeug (10) mit Sitzplätzen (11) für mehrerer Fahrgäste, wobei jedem Fahrgast in dem Fahrzeug (10) ein Steuerpult (12) mit einem Steuertaster (13) und einer Anzeigeeinheit (14) zugeordnet ist und wobei am Anfang der Schienenbahn eine Startrampe mit einer Signaleinheit (19) vorgesehen ist, welche ein visuelles und/oder akustisches Startsignal erzeugt, wobei der Steuertaster (13) und gegebenenfalls die Anzeigeeinheiten (14) aller Steuerpulte (12) über einen Transmitter (16) mit einer Auswertungs- und Steuerungseinheit (17) verbunden sind, welche die Reaktionszeiten aller Fahrgäste erfasst,
**dadurch gekennzeichnet, dass**
die Auswertungs- und Steuerungseinheit (17) aus den Reaktionszeiten einen Mittelwert, die kollektive Reaktionszeit, errechnet, welche vorzugsweise von der Anzeigeeinheit angezeigt wird, worauf nach Ablauf der kollektiven Reaktionszeit ein Signal zum Start des Fahrzeuges (10) erzeugt wird.

2. Fahrgeschäft nach Anspruch 1,
**dadurch gekennzeichnet, dass** die Auswertungs- und Steuerungseinheit (17) aus der kollektiven Reaktionszeit(t) einen den Startzeitpunkt und/oder die Fahrzeuggeschwindigkeit beeinflussenden Boostfaktor (B) ermittelt, der neben der kollektiven Reaktionszeit von der Anzeigeeinheit (14) angezeigt wird, wobei die Reaktionszeit 0 einem Boostfaktor von 100% und die zugelassene Reaktionszeit a einem Boostfaktor von 0% entspricht.

3. Fahrgeschäft nach Anspruch 2,
**dadurch gekennzeichnet, dass** in Abhängigkeit vom Boostfaktor der Startzeitpunkt verzögert und/oder die Fahrzeuggeschwindigkeit vermindert wird.

4. Fahrgeschäft nach Anspruch 3,
**gekennzeichnet durch** einen linearen Zusammenhang zwischen Boostfaktor (B) und kollektiver Reaktionszeit (t) nach der Formel:

$$B (\%) = 100 (1- t/a)$$

5. Fahrgeschäft nach einem der Ansprüche 1 bis 4, bei welchem nach Abgabe des Startsignals die Zeitnahme beginnt,
**dadurch gekennzeichnet, dass**
vor Abgabe des Startsignales ein Vorsignal erzeugt wird, bei welchem die Steuertaster (13) aller Fahrgäste (10) derart freigeschaltet werden, dass die mittels des Steuertasters (13) in dem Intervall zwischen Vorsignal und Startsignal erzeugten Impulse bei Ermittlung der Reaktionszeit unberücksichtigt bleiben und vorzugsweise zu einer Erhöhung der ermittelten Reaktionszeit führen.

6. Fahrgeschäft nach Anspruch 2, 3 oder 4,
**dadurch gekennzeichnet, dass**
neben der ermittelten Reaktionszeit und dem Boostfaktor aller Fahrgäste die individuelle Reaktionszeit und der individuelle Boostfaktor jedes einzelnen Fahrgastes von der Auswertungs- und Steuerungseinheit (17) ermittelt und mittels eines Displays (17a) während der ganzen Fahrt angezeigt wird.

**7.** Fahrgeschäft nach einem der Ansprüche 1 bis 6, **dadurch gekennzeichnet, dass** die Steuerpulte (12) zusätzlich zu der der quantitativen Anzeige der Reaktionszeit dienenden Anzeigeeinheit (14) Signallampen (15) zur qualitativen visuellen Anzeige der ermittelten Reaktionszeiten aufweisen.

**8.** Fahrgeschäft nach einem der Ansprüche 1 bis 7, **dadurch gekennzeichnet, dass** mehrere Schienenbahnen mit eigenen Startrampen in einem geringen Abstand zueinander angeordnet sind.

**9.** Fahrgeschäft nach einem der Ansprüche 1 bis 8, **dadurch gekennzeichnet, dass** im Verlauf der Schienenbahnen weitere Beschleunigungsstrecken mit einer eigenen Antriebseinheit angeordnet sind, die von den Fahrgästen mittels der Steuertaster beeinflusst werden können.

**10.** Fahrgeschäft nach einem der Ansprüche 1 bis 9, **dadurch gekennzeichnet, dass** der Fahrzeugantrieb (18) als Linearmotor ausgebildet ist.

**11.** Fahrgeschäft nach einem der Ansprüche 1 bis 10, **dadurch gekennzeichnet, dass** die von den Fahrgästen generierten Signale zur Auswertungs- und Steuerungseinheit (17) über Funk oder über Stromschienen übertragen werden.

**12.** Fahrgeschäft nach einem der Ansprüche 2 bis 11, **dadurch gekennzeichnet, dass** mit der Auswertungs- und Steuerungseinheit (17) ein Effektgenerator (20) verbunden ist, welcher in Abhängigkeit vom Boostfaktor bzw. der kollektiven Reaktionszeit optische und/oder akustische Effekte auslöst.

**13.** Fahrgeschäft nach einem der Ansprüche 1 bis 12, **dadurch gekennzeichnet, dass** das Fahrgeschäft Mittel zum Sammeln der Reaktionszeiten aufweist zum Erstellen einer Rangliste aus den gesammelten Reaktionszeiten nach wenigstens einer Fahrt des Fahrzeuges (10) auf der Schienenbahn.

**14.** Fahrgeschäft nach einem der Ansprüche 2 bis 13, **dadurch gekennzeichnet, dass** der Boostfaktor (B) in wenigstens einem Abschnitt der Schienenbahn während einer Durchfahrt des Fahrzeuges (10) durch diesen Abschnitt von der Auswertungs- und Steuerungseinheit (17) ermittelbar ist.

**Claims**

**1.** Interactive fairground ride, in particular rollercoaster, consisting of a preferably intrinsically closed track and at least one powered vehicle (10) which is guided on the track and which has seats (11) for a plurality of passengers, wherein each passenger in the vehicle (10) is assigned a control console (12) having a control button (13) and a display unit (14), and wherein there is provided at the start of the track a start ramp having a signal unit (19) which generates a visual and/or acoustic start signal, wherein the control buttons (13) and optionally the display units (14) of all control consoles (12) are connected via a transmitter (16) to an evaluation and control unit (17) which records the reaction times of all passengers, **characterized in that** the evaluation and control unit (17) calculates from the reaction times a mean value, the collective reaction time, which is preferably displayed by the display unit, whereupon a signal for starting the vehicle (10) is generated after the expiry of the collective reaction time.

**2.** Fairground ride according to claim 1, **characterized in that** the evaluation and control unit (17) determines from the collective reaction time (t) a boost factor (B) which influences the start time and/or the vehicle speed and which is displayed by the display unit (14) in addition to the collective reaction time, the reaction time 0 corresponding to a boost factor of 100% and the permitted reaction time a corresponding to a boost factor of 0%.

**3.** Fairground ride according to claim 2, **characterized in that** the start time is delayed and/or the vehicle speed is reduced as a function of the boost factor.

**4.** Fairground ride according to claim 3, **characterized by** a linear relationship between boost factor (B) and collective reaction time (t) according to the formula:

$$B\ (\%)\ =\ 100\ (1\ -\ t/a)$$

**5.** Fairground ride according to any of claims 1 to 4, in which the timer begins once the start signal has been emitted, **characterized in that**, before the start signal is emitted, a pre-signal is generated, upon which the control buttons (13) of all passengers (10) are enabled such that the impulses generated by the control button (13) in the interval between pre-signal and start signal are not taken into account when determining the reaction time and preferably lead to an increase in the determined reaction time.

**6.** Fairground ride according to claim 2, 3 or 4, **characterized in that**, in addition to the determined reaction time and the boost factor of all passengers, the individual reaction time and the individual boost factor of each individual passenger are determined by the evaluation and control unit (17) and are displayed by means of a display (17a) during the entire ride.

7. Fairground ride according to any of claims 1 to 6, **characterized in that** the control consoles (12) have, in addition to the display unit (14) which serves for displaying the reaction time quantitively, indicator lights (15) for visually displaying the determined reaction times qualitatively.

8. Fairground ride according to any of claims 1 to 7, **characterized in that** a plurality of tracks which each have separate start ramps are arranged at a small distance from one another.

9. Fairground ride according to any of claims 1 to 8, **characterized in that** further acceleration sections which each have a separate drive unit and which can be influenced by the passengers by means of the control buttons are arranged in the course of the tracks.

10. Fairground ride according to any of claims 1 to 9, **characterized in that** the vehicle drive (18) is configured as a linear motor.

11. Fairground ride according to any of claims 1 to 10, **characterized in that** the signals generated by the passengers are transmitted to the evaluation and control unit (17) wirelessly or via conductor rails.

12. Fairground ride according to any of claims 2 to 11, **characterized in that** an effect generator (20) is connected to the evaluation and control unit (17), which effect generator triggers optical and/or acoustic effects as a function of the boost factor and/or the collective reaction time.

13. Fairground ride according to any of claims 1 to 12, **characterized in that** the fairground ride has means for collecting the reaction times in order to create a ranking list from the collected reaction times after at least one ride of the vehicle (10) on the track.

14. Fairground ride according to any of claims 2 to 13, **characterized in that** the boost factor (B) can be determined by the evaluation and control unit (17) in at least one section of the track as the vehicle (10) travels through said section.

**Revendications**

1. Attraction foraine interactive, en particulier grand huit interactif constitué d'un trajet sur rails de préférence fermé sur lui-même et d'au moins un véhicule (10) entraîné guidé sur le trajet sur rails et comportant des places assises (11) pour plusieurs passagers, à chaque passager du véhicule (10) étant attribué un pupitre de commande (12) équipé d'une touche de commande (13) et d'une unité d'affichage (14), et au début du trajet sur rails étant prévue une rampe de départ équipée d'une unité (19) qui délivre un signal de départ visuel et/ou acoustique, les touches de commande (13) et le cas échéant les unités d'affichage (14) de tous les pupitres de commande (12) étant reliées, par l'intermédiaire d'un transmetteur (16) à une unité d'exploitation et de commande (17) qui détecte les temps de réaction de tous les passagers,
**caractérisée en ce que**
l'unité d'exploitation et de commande (17) calcule, à partir des temps de réaction, une valeur moyenne ou temps de réaction collectif qui est de préférence affichée par le dispositif d'affichage, et, après écoulement du temps de réaction collectif un signal pour démarrer le véhicule (10) est délivré.

2. Attraction foraine conforme à la revendication 1, **caractérisée en ce que**
l'unité d'exploitation et de commande (17) détermine à partir du temps de réaction collectif (t) un facteur de stimulation (B) agissant sur l'instant de départ et/ou la vitesse du véhicule, et qui, est affiché par l'unité d'affichage (14) à côté du temps de réaction collectif le temps de réaction 0 correspondant à un facteur de stimulation de 100% et le temps de réaction a toléré correspondant à un facteur de stimulation de 0%.

3. Attraction foraine conforme à la revendication 2, **caractérisée en ce que**
l'instant de départ est retardé en fonction du facteur de stimulation et/ou la vitesse du véhicule est diminuée en fonction du facteur de stimulation.

4. Attraction foraine conforme à la revendication 3, **caractérisée par**
une relation linéaire entre le facteur de stimulation (B) et le temps de réaction collectif (t) selon la formule :

$$B \ (\%) = 100 \ (1 - t/a)$$

5. Attraction foraine conforme à l'une des revendications 1 à 4,
dans laquelle le chronométrage commence après la délivrance d'un signal de départ,
**caractérisée en ce qu'**
avant la délivrance du signal de départ, est produit un signal préalable en présence duquel les touches de commande (13) de tous les passagers (10) du véhicule sont libérées de sorte que les impulsions produites au moyen de la touche de commande (13) dans l'intervalle situé entre le signal préalable et le signal de départ ne sont pas prises en considération lors de la détermination du temps de réaction et conduisent, de préférence à une augmentation du temps de réaction déterminé.

6. Attraction foraine conforme à la revendication 2, 3 ou 4,
   **caractérisée en ce qu'**
   en plus du temps de réaction et du facteur de stimulation de tous les passagers, déterminés le temps de réaction individuel et le facteur de stimulation individuel de chaque passager sont déterminés par l'unité d'exploitation et de commande (17) et affichés au moyen d'un écran (17a) pendant la totalité du trajet.

7. Attraction foraine conforme à l'une des revendications 1 à 6,
   **caractérisée en ce que**
   les pupitres de commande (12), comportent, en plus de l'unité d'affichage (14) permettant l'affichage quantitatif du temps de réaction, des lampes de signalisation (15) permettant un affichage visuel qualitatif des temps de réaction déterminés.

8. Attraction foraine conforme à l'une des revendications 1 à 7,
   **caractérisée en ce que**
   plusieurs trajets sur rails ayant des rampes de départ propres sont montés à faible distance les uns des autres.

9. Attraction foraine conforme à l'une des revendications 1 à 8,
   **caractérisée en ce que**
   dans le tracé des trajets sur rails, sont montées d'autres voies d'accélération ayant une unité d'entraînement propre sur lesquelles les passagers peuvent avoir une influence au moyen des touches de commande.

10. Attraction foraine conforme à l'une des revendications 1 à 9,
    **caractérisée en ce que**
    l'entraînement du véhicule (12) est réalisé sous la forme d'un moteur linéaire.

11. Attraction foraine conforme à l'une des revendications 1 à 10,
    **caractérisée en ce que**
    les signaux générés par les passagers sont transmis à l'unité d'exploitation et de commande (12) par liaison radio ou par l'intermédiaire de rails conducteurs.

12. Attraction foraine conforme à l'une des revendications 2 à 11,
    **caractérisée en ce qu'**
    à l'unité d'exploitation et de commande (17) est relié un générateur d'effets qui déclenche des effets optiques et/ou acoustiques, en fonction du facteur de stimulation ou du temps de réaction collectif.

13. Attraction foraine conforme à l'une des revendications 1 à 12,
    **caractérisée en ce qu'**
    il comporte des moyens permettant de rassembler les temps de réaction pour permettre d'obtenir, un classement à partir des temps de réaction rassemblés après au moins un trajet du véhicule (10) sur le trajet sur rails.

14. Attraction foraine conforme à l'une des revendications 2 à 13,
    **caractérisée en ce que**
    le facteur de stimulation (B) peut être déterminé par l'unité d'exploitation et de commande (17) dans au moins un segment du trajet sur rails, pendant un passage du véhicule (10) sur ce segment.

## FIG 1

## FIG 2

FIG 3

Fahrzeug/Zug

Sitzplatz 1
Sitzplatz 2
Sitzplatz 3
...
Sitzplatz n — 11

Transmitter — 16

Signale der einzelnen Fahrgäste
(z.B.: Tastendruck)

Signalübermittlung
(z.B.: per Funk, per Kabel)

10

Signaleinheit
(z.B.: Visuell; akustisch) — 19

19a
19b

Auswertungs-/Steuerungseinheit — 17

Display — 17a

Opitonal oder alternativ
Effektgenerator
(z.B.: Nebelfontäne;
Akustisches Signal;
Visuelles Feedback) — 20

Einrichtung zum
Beschleunigen/Verzögern
des Fahrzeugs
(z.B.: Linearmotor) — 18

**EP 3 169 417 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008257196 A1
- DE 10245150 A1